# EUROPEAN PATENT APPLICATION

(11) **EP 3 026 357 A2**
(43) Date of publication of application: **01.06.2016**
(21) Application number: 15196535.7
(22) Date of filing: 26.11.2015
(51) Int. Cl.: F24F 7/08, F24F 11/053, F24F 12/00, H05K 7/20

(54) **A VENTILATION SYSTEM**

(30) Priority: 27.11.2014 DK 201470743
(71) Applicant: Energy Cool ApS, 7000 Fredericia (DK)
(72) Inventor: THORSEN, Henrik Rold, 7000 Fredericia (DK)
(74) Representative: Inspicos P/S

(57) **Abstract**

The invention provides system for cooling a space. The system comprises a housing with an external inlet, an external outlet, an internal inlet, an internal outlet, and is configurable to provide a first flow passage for conducting air between the external inlet and the internal outlet and to provide, a second flow passage for conducting air between the external inlet and the external outlet, and a third flow passage for conducting air between the internal inlet and the internal outlet. The internal outlet comprises means for generating a laminar airflow at the internal outlet.

## Description

### INTRODUCTION

The invention relates to a system for thermal convection between an enclosed space and a surrounding space. Such systems are known e.g. for server room cooling or generally for ventilating closed spaces.

### BACKGROUND OF THE INVENTION

Ventilation of closed spaces can be classified in two categories, mixing ventilation and displacement ventilation.

Mixing ventilation systems use a fan for establishing a forced flow of air, typically at a high air velocity. Due to the high velocity, the air in the entire room is normally mixed and air temperature fluctuations are minimised.

Displacement ventilation systems use low velocity fans and laminar-flow air outlets to prevent mixing and to obtain displacement of hot or cold air from the ventilated space. The temperature fluctuations are thereby not minimised. On the contrary, the ventilation creates an upper zone at the ceiling and a lower zone at the floor, the upper and lower zones having completely different temperature. If the displacement ventilation works correctly, the upper and lower zones are joined at a thin transition zone where the temperature changes.

One advantage of the displacement principle as opposed to the mixing principle is that a selective amount of air in the space can be replaced, e.g. only up to a certain height above ground.

Displacement ventilation systems use powered cooling units, e.g. compressor based units, and the air in the ventilated space is typically allowed to decent from the cold evaporator of the unit and sink to the floor. Due to large temperature differences between the compressor cooled air and the hot air in the ventilated space, the compressor not only increases the power consumption, it also increases thermal convection and thus the speed by which the air moves in the ventilated space. This reduces the separation between the upper and lower zones and leads to further increased energy consumption.

Additionally, the relatively high air speed can cause unpleasant draught and thus reduces the wellbeing in the ventilated space.

The existing systems does not facilitate displacement ventilation by selective powered cooling with a heat pump and non-powered cooling by use of outside air.

### DESCRIPTION OF THE INVENTION

It is an object of embodiments of the invention to reduce the costs of cooling.

It is a further object to provide cooling, particularly of server rooms and similar technical installations with reduced dependency on electrical power,

It is a further object to improve the wellbeing in ventilated spaces.

It is a further object to enable a larger flexibility and to facilitate the use of a system for different thermal conditions.

According to a first aspect, the invention provides a system for ventilating a space, the system comprising a housing with an external inlet, an external outlet, an internal inlet, and an internal outlet. The system is configurable to facilitate selection of at least one of a first flow passage, a second flow passage, and a third flow passage. The first flow passage facilitating conduction of air between the external inlet and the internal outlet, the second flow passage facilitating conduction of air between the external inlet and the external outlet, and the third flow passage facilitating conduction of air between the internal inlet and the internal outlet. The system according to the invention further comprises power driven means for creating a driven air flow in the selected flow passage(s) and outlet means for generating a laminar airflow at the internal outlet.

Due to the different flow passages, the system according to the invention may provide different modes of operation, particularly it may provide a passive mode with cooling by use of outside air, and an active mode with cooling by use of a heat pump, and due to the outlet means for generating a laminar airflow, each different mode of operation can be obtained with displacement ventilation. This is highly advantageous when compared to the traditional systems. When the different modes of operation are combined with laminar flow at the internal outlet, the transition zone in the ventilated space can be maintained, and the shift between the different modes can be carried out effectively without having to wait for the air to completely mix up in the room or to wait for the air to settle into an upper layer and a lower layer separated by a transition.

Particularly, the power driven means may be configured to operate in a manner insuring only laminar flow at the internal outlet, and preferably based on a desired temperature at a predetermined height over ground in the ventilated space. The invention may thus particularly provide the combination between a system according to claim 1, for passive cooling without a compressor, and with a control unit configured to operate the power driven means in such a way that laminar flow is preserved at the internal outlet.

In the following description, the term *ventilated space* is the space of the room which is ventilated by use of the system, i.e. e.g. the space inside a server room or other places with technical installation having a need for cooling or generally inside a ventilated room. Likewise, the term *external space* is a surrounding space outside the ventilated space.

The ability to configure the system with the specified first, second, or third flow passage enables different modes of operation, e.g.:
- a mode where air is driven from an external space, in the following referred to as *external air,* i.e. in this mode, air is circulated between the external inlet and the internal outlet. In the following, this will be referred to as a first mode of operation.
- a mode where air is circulated in the internal space, i.e. where air from the internal space, in the following referred to as *internal air,* is driven between the internal inlet and the internal outlet. In the following, this will be referred to as a second mode of operation. This could be used e.g. for establishing convection between different thermal zones in the ventilated space, or it could be used e.g. in combination with a heat pump where the temperature of the internal air is reduced by a compressor or similar heat pump.
- a mode where air is driven from the external space to a space inside the housing of the system, i.e. where air is circulated between the internal inlet and internal outlet. In the following, this will be referred to as a third mode of operation. This could be used e.g. for cooling internal components inside the system itself, e.g. for cooling a heat pump such as the condenser of a compressor driven heat pump.
- a combined mode where air is circulated in the internal space and where air is driven from the external space to the ventilated space.

Without the outlet means for generating a laminar flow, the external air, when driven into the ventilated space, would possibly cause mixing of the internal air leading to an increased need for cooling and possibly leading to a need for a heat pump to reduce the temperature further. Also, the shift between use of outside air and powered cooling would take time since the balance between mixing and displacement ventilation would have to be established between each shift.

Due to the outlet means for generating a laminar airflow, each of the obtainable modes and thus either air from the external space, or air from the internal space, with or without use of a heat pump, can be used for displacement of air from a lower zone of the ventilated space into an upper zone of the ventilated space. In one mode of operation, the ventilation system thereby enables use of the external air, directly at that temperature at which it is available, for displacement of the internal air. This may enable cooling with very low power consumption since no power is consumed by a heat pump and only very little power is consumed by a low speed fan applied for causing the laminar air flow at the internal outlet, and as a result, the ventilated room may obtain a lower zone where the internal air is replaced with the colder, however not actively cooled external air and an upper zone with hot internal air.

Accordingly, the invention provides a system where the user can switch between different modes with powered or non-powered cooling and due to the outlet means which generates a laminar airflow at the internal outlet, a laminar flow can be established in all modes. Accordingly, the modes can be shifted without having to initiate a new balance between hot and cold air in the ventilated space. Shifting between the different modes may therefore have instant effect.

The system may be configurable to provide the second flow passage simultaneously with the third flow passage. This may e.g. be an advantage in combination with a heat pump, where thermal energy is pumped from the third flow passage to the second flow passage, e.g. by use of a compressor driven system with the evaporator in thermal communication with the third flow passage and with the condenser in thermal communication with the second flow passage.

The system may comprise a control unit configured to select one or more of the flow passages based on a temperature signal.

The system may further comprise a first sensor configured to generate a first temperature signal significant for a first temperature and a second sensor configured to generate a second temperature signal significant for a second temperature. The first sensor could be arranged e.g. in the external space to thereby measure the temperature of the external air, and the second sensor could be arranged in the ventilated space to thereby measure the temperature therein.

The control unit could be configured to select one or more flow passages of the first, second, and third flow passage based on a difference between the first temperature signal and the second temperature signal.

In one example, the control unit may be configured for keeping the temperature in the ventilated space below a pre-specified limit or it may be configured to keep the temperature as low as possible, e.g. without use of a heat pump. In this example, the first flow passage could be selected when the first temperature signal indicates an external air temperature which is lower than the temperature measured in the ventilated space by the second temperature sensor. In the opposite situation where the first temperature signal indicates an external air temperature which is higher than the temperature measured in the ventilated space by the second temperature sensor, three different modes are relevant:
a) in a paused mode, the power driven means for creating a driven air flow in the selected flow passage is stopped, and/or none of the flow passages are selected;
b) in a circulation mode, the third flow passage facilitating conduction of air between the internal inlet and the internal outlet is selected for mixing the air internally in the ventilated space;
c) in an air-conditioning mode, the second flow passage facilitating conduction of air between the external inlet and the external outlet and third flow passage facilitating conduction of air between the internal inlet and the internal outlet is selected simultaneously, and a heat pump arranged to pump thermal energy from the third passage to the second flow passage is operated. The temperature in the ventilated space can thereby be reduced below the temperature of the external air, or it can be heated to above the temperature of the external air depending on the direction of the heat pump. In one embodiment, that direction may be selectable.

In all three modes a)-c), the outlet means generate a laminar airflow at the internal outlet, and shifting between the different modes may therefore be done without having to establish a transition zone.

In another example, the control unit may be configured for keeping the temperature in the ventilated space above a pre-specified limit or it may be configured to keep the temperature as high as possible, e.g. without use of a heat pump. In this example, the first flow passage could be selected when the first temperature signal indicates an external air temperature which is higher than the temperature measured in the ventilated space by the second temperature sensor. In the opposite situation where the first temperature signal indicates an external air temperature which is lower than the temperature measured in the ventilated space by the second temperature sensor, the above three different modes a)-c) are relevant with the amendment that the heat pump in mode c) should be directed to pump thermal energy from the second passage to the third flow passage. The temperature in the ventilated space can thereby be increased above the temperature of the external air.

The system may further comprise a third sensor configured to generate a third temperature signal significant for a third temperature and a fourth sensor configured to generate a fourth temperature signal significant for a fourth temperature. The control unit could then be configured to select one or more flow passages of the flow passages based on one or based on at least two of the four temperature signals. The third and fourth temperature sensors could be arranged e.g. directly in connection with the external outlet and the internal outlet to thereby determine a temperature of the air leaving the system either into the external space or into the ventilated space.

As mentioned already, the system may comprise a power driven heat pump arranged to pump thermal energy between the second and the third flow passage, in either direction.

The control unit could then be configured to control the heat pump based on at least one, and preferably based on at least two of the four temperature signals.

The heat pump could be releasably attached to the housing such that the system can be refitted with a heat pump for use in environments where it is necessary. By releasably attached is herein meant that the system comprises an attachment structure by which the heat pump can be fitted to an existing system, and possibly also be removed from the system for later use with another system of the same kind.

The system may further comprise an electronic interface configured to electrically connect the power driven heat pump to the control unit upon attachment of the heat pump to the housing. The control unit may be configured to automatically adapt settings and control principles depending on the connection of a heat pump via the interface. I.e. the selection of flow passages based on temperature signals may depend on whether or not a heat pump is connected.

The system may comprise a shunt facilitating variable mixing of air of one flow passage with air of another flow passage, e.g. controlled based on one of the first, second, third or fourth temperature signals.

The shunt may particularly facilitate variable mixing of air from the first flow passage with air from a fourth flow passage for conducting air between the internal inlet and the external outlet.

The system may further comprise a sensor for providing a humidity signal significant for a humidity, e.g. in the external space or in the ventilated space, and the control unit may select the flow passage based on the humidity signal, e.g. in combination with one of the first, second, third and fourth signal.

In a second aspect, the invention provides a method of ventilating a space by use of a system described above.

### BRIEF DESCRIPTION OF THE DRAWINGS

Embodiments of the invention will now be further described with reference to the drawings, in which:
Fig. 1 illustrates a system according to the invention inserted in a wall of a building;
Fig. 2 illustrates passive laminar displacement ventilation by use of an apparatus according to the invention; and
Fig. 3 illustrates a combination with active heat pump driven cooling.

### DETAILED DESCRIPTION OF THE DRAWINGS

It should be understood that the detailed description and specific examples, while indicating embodiments of the invention, are given by way of illustration only, since various changes and modifications within the spirit and scope of the invention will become apparent to those skilled in the art from this detailed description.

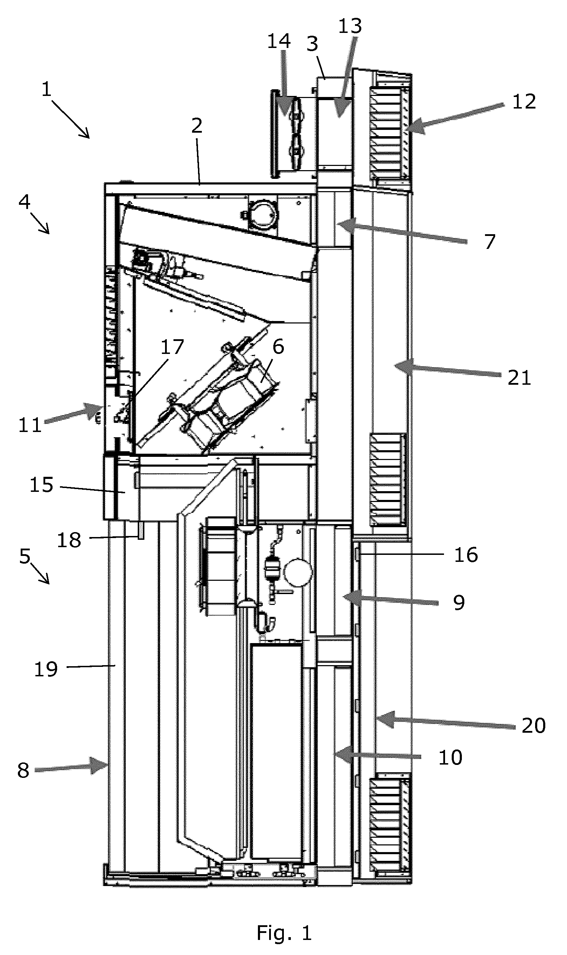

Fig. 1 illustrates a system 1 according to the invention for ventilating a space. The system comprises a housing 2 which is suspended on a wall 3 of the space which is to be ventilated.

The system comprises a passive ventilation unit 4 and a power driven heat pump 5.

The system comprises a power driven ventilator, e.g. an electrical fan 6, for creating a driven air flow.

The system is configured for at least two modes of operation.

In the first mode of operation, the power driven heat pump 5 is deactivated and cold air is drawn from outside the ventilated space through the external passive inlet 7. The cold air is exhausted through the internal outlet 8.

In the second mode of operation, the power driven heat pump 5 is activated and cold air is drawn from outside the ventilated space through the external inlet 9 and exhausted out of the ventilated space through the outlet 10. The power driven heat pump has a hot side and a cold side. The hot side is cooled by a flow between the external inlet 9 and the external outlet 10. The cold side communicates thermal energy with air passing between the passage between the internal inlet 11 and the internal outlet 8.

The external inlets and outlets 9, 10 are fitted with wall ducts extending across the width of the wall 3 and thereby form openings in the wall outside the ventilated space.

To provide selection between the first and second modes of operation, the system comprises a valve-structure which facilitates selection between different flow passages within the housing.

A first one of the selectable flow passages facilitates conduction of air between the passive external inlet 7 and the internal outlet 8.

A second one of the selectable flow passages facilitates conduction of air between the external inlet 9 and the external outlet 10.

A third one of the selectable flow passages facilitates conduction of air between the internal inlet 11 and the internal outlet 8.

When the system is operated in the first mode of operation, overpressure inside the ventilated space is prevented by the pressure relief opening 12 through the wall duct 13 and the damper 14.

The system comprises an air exchange control unit 15 configured to select at least one of the first flow passage, second flow passage, or third flow passage based on a temperature signal which may e.g. indicate a temperature in the ventilated space and/or a temperature outside the ventilated space. In the illustrated embodiment, the system comprises temperature measuring devices 16, 17, 18 located at the external inlet, at internal inlet, and at the internal outlet.

At the internal outlet, the system comprises a plurality of ribs or vanes 19 which creates a laminar airflow. Due to the ribs or vanes, the system according to the invention can be operated as a displacement ventilation system in which a low flow speed at the outlet, in combination with laminar flow, reduces mixing of the air in the ventilated space. The ribs or vanes could be replaced with a curtain. The flow speed at the outlet is preferably less than 1 meter per seconds and more preferably less than 0.1 meters per second. In the disclosed embodiment, the internal outlet and the outlet means forms part of an evaporator of a compressor based heat pump.

The selection of the flow passage depends on temperature signals and it is carried out by the control unit

To reduce noise and prevent entrance of humidity and dust, the system may comprise an inlet and/or an outlet cap 20 covering the external inlet(s) and outlet(s).

In the illustrated embodiment, the passive external inlet is separate from the external inlet, but they could be formed by the same opening through the wall, i.e. constituting one structural entity. In the illustrated embodiment with two separate inlets, the passive inlet has a separate inlet cap 21.

### EXAMPLE

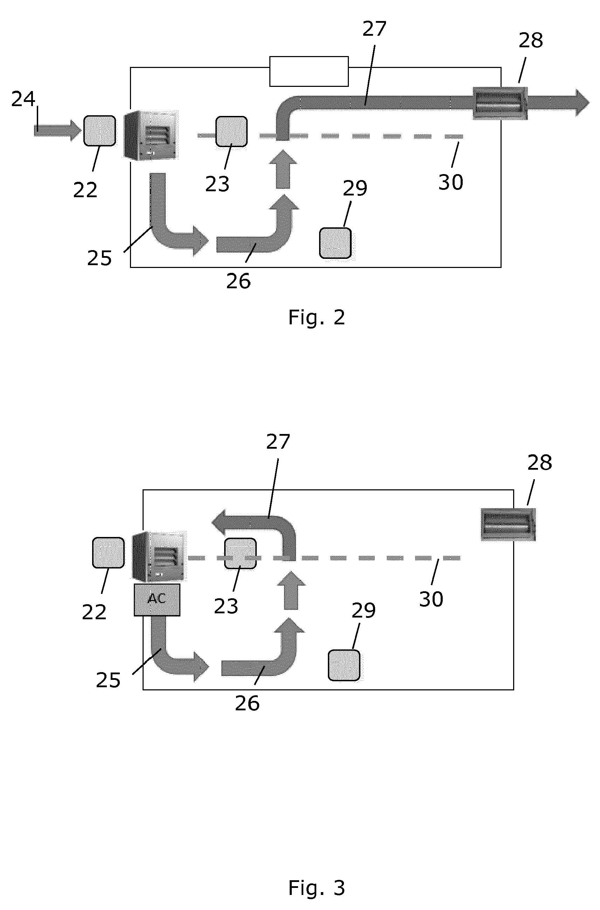

Fig. 2 illustrates the principles of the apparatus for ventilation in a passive mode without use of a heat pump and with laminar displacement.

Cold outside air is drawn into the apparatus. The thermostat 22 controls the temperature of outside air. The other thermostat 23 controls the temperature at the floor. The cold outside air illustrated by the arrows 24, 25, 26 is pressed into and distributed to the ventilated space from a lower portion of the apparatus. The cold outside air pushes warm inside air illustrated by the arrow 27 up in the ventilated space and out of the ventilated space through the departure port 28. Quantity and height of the transition between the cold air and the warm air is controlled by thermostat 29. There will be cold air up to the dotted line 30. The temperature of the air over this line is higher. Typically, computers, servers, and other heat generating equipment are placed in the cold zone under the line.

The apparatus has a release opening on the front. In one embodiment, the release opening is closed when the temperature of outside air is sufficiently low and therefor can be used for ventilation and cooling. At very cold outdoor temperatures, the release opening opens and the apparatus will use indoor air for ventilation, i.e. the system operate with internal recirculation. In this case the departure port 28 closes.

The internal fan is speed-controlled and is controlled by the three thermostats 22, 23, 29.

Fig. 3 illustrates the apparatus with active heat pump driven cooling. The controller automatically switches between free passive cooling and active, powered, cooling by use of a compressor. Powered cooling is only used at very high outside temperatures. By powered cooling a constant temperature throughout the cabin can be obtained, and the transition between warm and cold air can be omitted. The device may, due to the internal outlet which provides laminar airflow, continuously be used for displacement ventilation both with and without the powered cooling. Accordingly, the control system may shift between powered and non powered cooling without amending the flow conditions in the ventilated space and therefore without delay in the response related to the change between the two ventilation principles.

### NUMBERED EMBODIMENTS

1. A system (1) for ventilating a space, the system comprising a housing (2) with at least one external inlet (7, 9), at least one external outlet (10), at least one internal inlet (11), an internal outlet (8), and being configurable to facilitate selection of at least one of a first flow passage, a second flow passage, and third flow passage, the first flow passage facilitating conduction of air between the external inlet and the internal outlet, the second flow passage facilitating conduction of air between the external inlet and the external outlet, and the third flow passage facilitating conduction of air between the internal inlet and the internal outlet, the system further comprises power driven means for creating a driven air flow in the selected flow passage(s) and outlet means for generating a laminar airflow at the internal outlet.
2. A system according to embodiment 1, wherein the second flow passage can be established simultaneously with the third flow passage.
3. A system according to any of the preceding embodiments, further comprising a control unit (15) configured to select at least one of the first flow passage, second flow passage, or third flow passage based on a temperature signal (i.e. a temperature in the space and a temperature outside the space).
4. A system according to any of the preceding embodiments, further comprising a first sensor (16, 17, 18) configured to generate a first temperature signal significant for a first temperature and a second sensor (16, 17, 18) configured to generate a second temperature signal significant for a second temperature.
5. A system according to embodiment 4, wherein the control unit is configured to select one or more flow passages of the flow passages based on a difference between the first temperature signal and the second temperature signal.
6. A system according to embodiment 4 or 5, further comprising a third sensor (16, 17, 18) configured to generate a third temperature signal significant for a third temperature and a fourth sensor (16, 17, 18) configured to generate a fourth temperature signal significant for a fourth temperature.
7. A system according to embodiment 6, wherein the control unit is configured to select one or more flow passages of the flow passages based on at least two of the four temperature signals.
8. A system according to any of the preceding embodiments, further comprising a power driven heat pump (5) configured for heat transfer between the second and third flow passage.
9. A system according to embodiments 4-7 and 8, where the control unit is configured to control the heat pump based on at least one of the first, second, third and fourth temperature signals.
10. A system according to any of embodiments 8-9, where the heat pump is releasably attached to the housing.
11. A system according to embodiment 10, further comprising an electronic interface configured to electrically connect the power driven heat pump to the control unit upon attachment of the heat pump to the housing.
12. A system according to any of the preceding embodiments, further comprising a shunt facilitating variable mixing of air of one flow passage with air of another flow passage.
13. A system according to embodiment 12, wherein the shunt facilitates variable mixing air from the first flow passage with air from a fourth flow passage for conducting air between the internal inlet and the external outlet.
14. A system according to any of embodiments 12-13, wherein the control unit is configured to control at least one of the blower and the shunt based on at least one of the four temperature signals.
15. A method of ventilating a space by use of a system according to any of the preceding embodiments.

## Claims

1. A system (1) for ventilating a space, the system comprising a housing (2) with at least one external inlet (7, 9), at least one external outlet (10), at least one internal inlet (11), an internal outlet (8), and being configurable to facilitate selection of at least one of a first flow passage, a second flow passage, and third flow passage, the first flow passage facilitating conduction of air between the external inlet and the internal outlet, the second flow passage facilitating conduction of air between the external inlet and the external outlet, and the third flow passage facilitating conduction of air between the internal inlet and the internal outlet, the system further comprises power driven means for creating a driven air flow in the selected flow passage(s) and outlet means for generating a laminar airflow at the internal outlet.

2. A system according to claim 1, wherein the second flow passage can be established simultaneously with the third flow passage.

3. A system according to any of the preceding claims, further comprising a control unit (15) configured to select at least one of the first flow passage, second flow passage, or third flow passage based on a temperature signal.

4. A system according to any of the preceding claims, further comprising a first sensor (16, 17, 18) configured to generate a first temperature signal significant for a first temperature and a second sensor (16, 17, 18) configured to generate a second temperature signal significant for a second temperature.

5. A system according to claim 4, wherein the control unit is configured to select one or more flow passages of the flow passages based on a difference between the first temperature signal and the second temperature signal.

6. A system according to claim 4 or 5, further comprising a third sensor (16, 17, 18) configured to generate a third temperature signal significant for a third temperature and a fourth sensor (16, 17, 18) configured to generate a fourth temperature signal significant for a fourth temperature.

7. A system according to any of claims 3-6, wherein the control unit is configured to select one or more flow passages of the flow passages based on at least two of the temperature signals.

8. A system according to any of the preceding claims, further comprising a power driven heat pump (5) configured for heat transfer between the second and third flow passage.

9. A system according to claims 4-7 and 8, where the control unit is configured to control the heat pump based on at least one of the first, second, third and fourth temperature signals.

10. A system according to claim 8-9, where the heat pump is releasably attached to the housing.

11. A system according to claim 10, further comprising an electronic interface configured to electrically connect the power driven heat pump to the control unit upon attachment of the heat pump to the housing.

12. A system according to any of the preceding claims, further comprising a shunt facilitating variable mixing of air of one flow passage with air of another flow passage.

13. A system according to claim 12, wherein the shunt facilitates variable mixing air from the first flow passage with air from a fourth flow passage for conducting air between the internal inlet and the external outlet.

14. A system according to any of claims 12-13, wherein the control unit is configured to control at least one of the blower and the shunt based on at least one of the four temperature signals.

15. A method of ventilating a space by use of a system according to any of the preceding claims.
